# EUROPEAN PATENT SPECIFICATION

(11) **EP 1 111 503 B1**
(45) Date of publication and mention of the grant of the patent: **26.10.2005**
(21) Application number: 00310249.8
(22) Date of filing: 17.11.2000
(51) Int. Cl.: G06F 9/445, H04L 12/24

(54) **System and method for dynamic model loading**
System und Verfahren zur dynamischen Modell-Ladung
Système et procédé de chargement dynamique d'un modèle

(30) Priority: 23.12.1999 US 471243
(43) Date of publication of application: 27.06.2001
(73) Proprietor: Nortel Networks Limited, St.Laurent, Quebec H4S 2A9 (CA)
(72) Inventor: Walls, Gordon F., Kanata, Ontario K2L 2T2 (CA)
(74) Representative: Mackenzie, Andrew Bryan

(56) References cited:
- EP-A- 0 718 761
- EP-A- 0 909 058
- EP-A- 0 911 728

## Description

This invention relates to a system and method for dynamic model loading, and more particularly, to a system and method for dynamically loading data about a service system into a service model in a service management system.

### BACKGROUND OF THE INVENTION

Service management systems provide users with data about underlying service systems. A typical service management system uses a service model for storing data about the service system, and Graphical User Interfaces (GUIs) for presenting the data to the users.

Many GUIs utilize the Model-View-Controller (MVC) pattern for implementation. Distributed GUIs often utilize the Multi-layer MVC (MMVC) pattern. Both patterns require that the service model be completely created at initialization and only changed when the data actually changes. The service model holds and maintain the data about the entire service system.

As an example of service management systems, network management systems are no different in their use of MMVC and MVC to create GUIs, and their use of network models for storing data about underlying networks.

Traditional network management systems initialize the network model with a complete view of the network. Given the size of older networks and the CPU/Memory capabilities of older computers in older network management systems, this was a successful approach. However, network size is increasing at faster rate than CPU/Memory capabilities of application computers. Some networks contain tens of thousands of network elements and millions of connections among the network elements. The approach using the complete network model causes serious scalability limitations in the network management systems. The network model in those network management systems is too large to coexist with GUIs using standard MVC and MMVC techniques.

Some Network management systems have attempted to move the network model, i.e., a GUI model, into their server layers. However, this approach creates serious performance problems for GUI allocations that attempt it.

MORGENTHAL JP ("Understanding Enterprise JAVA APIs", Middleware & Infrastructure, August 1999, Pages 36-40) discloses Enterprise Java APIs including the Java Transaction Service (JTS)/Java Transaction API (JTA), Java Naming and Directory Services (JNDI) and Java Messaging Service (JMS). U.S. Patent No. 5,440,744 discloses a network having platforms, each of which has a loader/unloader software component.

It is still needed to provide a system which is capable of removing the above mentioned scalability limitations in service management systems, and which is suitably used in a network management system which manages a network comprising a large number of network elements.

### SUMMARY OF THE INVENTION

The present invention as set forth in the appended claims uses a loader manager to manage a service model that stores data about a service system. The loader manager dynamically loads data about the service system into the service model when it is needed.

In accordance with an aspect of the present invention, there is provided a loader manager for managing a service model that stores data about a service system having multiple services. The loader manager comprises a receiving port, a calling port, a load operator and a model interface. The receiving port is provided to receive a load request for loading data into the service model. The calling port is provided to call a loader capable of carrying out the loading of the data. The loader is supplied to the calling port. The load operator for invoking the loader. The model interface communicate with the service model. The loading is carried out through the model interface.

In accordance with another aspect of the present invention, there is provided a service model utility for managing a service model that stores data about a service system. The service model utility comprises a loader requester, a loader supplier and a loader manger. The load requester is provided for generating a load request for loading data into the service model. The loader supplier is provided for providing a loader capable of carrying out the loading of the data. The loader manager is provided for receiving the load request from the load requester, and issuing a call for calling the loader from the loader supplier in response to the load request. The loader manager including: a receiving port for receiving the load request from the load requester, a calling port for issuing a call for calling the loader in response to the load request, the loader being supplied to the calling port from the loader supplier, a load operator for invoking the loader to perform a loading operation associated with the loader, and a model interface for communicating with the service model. The loading is carried out through the model interface.

In accordance with another aspect of the invention, there is provided a method for managing a service model that stores data about a service system. The method includes the steps of: at a loader manager, receiving a load request for loading data into the service model, and at the loader manager, calling a loader in response to the load request. The loader is capable of carrying out the loading of the data into the service model. The method includes the step of: at a loader supplier, in response to the call, supplying the loader to the loader manager. Then, the loader is allowed to carry out the loading of the data into the service model through a model interface for communicating with the service model.

Other aspects and features of the present invention will be readily apparent to those skilled in the art from a review of the following detailed description of preferred embodiments in conjunction with the accompanying drawings.

### BRIEF DESCRIPTION OF THE DRAWINGS

The invention will be further understood from the following description with reference to the drawings in which:
Figure 1 is a diagram showing a service management system in accordance with an embodiment of the present invention;
Figure 2 is a diagram showing an example of the loader manager shown in Figure 1;
Figure 3 is a diagram showing examples of load threads;
Figure 4 is a diagram showing an example of register operation;
Figure 5 is a diagram showing an example of loader operation;
Figure 6 is a diagram showing an example of cancel operation; and
Figure 7 is a diagram showing a network management system in accordance with another embodiment of the present invention.

### DETAILED DESCRIPTION OF THE PREFERRED EMBODIMENTS

In a service management system, the present invention provides a loader manager to manage a service model that stores data about an underlying service system. The loader manager provides dynamic model loading capabilities to dynamically load a specific section of data about the service system into the service model when it is required. The dynamic model loading provides scalability and flexibility in the framework of the service management system.

The dynamic model loading is completely independent of what is loaded and how it is loaded. Accordingly, the present invention provides a generic solution that can be used in a number of application spaces in the service management field. For example, the dynamic model loading is of significant value in creating network management systems that can support the scalability of networks having a large number of network elements.

The loaded sections of data about the service system is preferably unloaded when they are no longer required, as they may be determined by various caching strategies in the service management systems. This further contributes to the scalability of the service management systems.

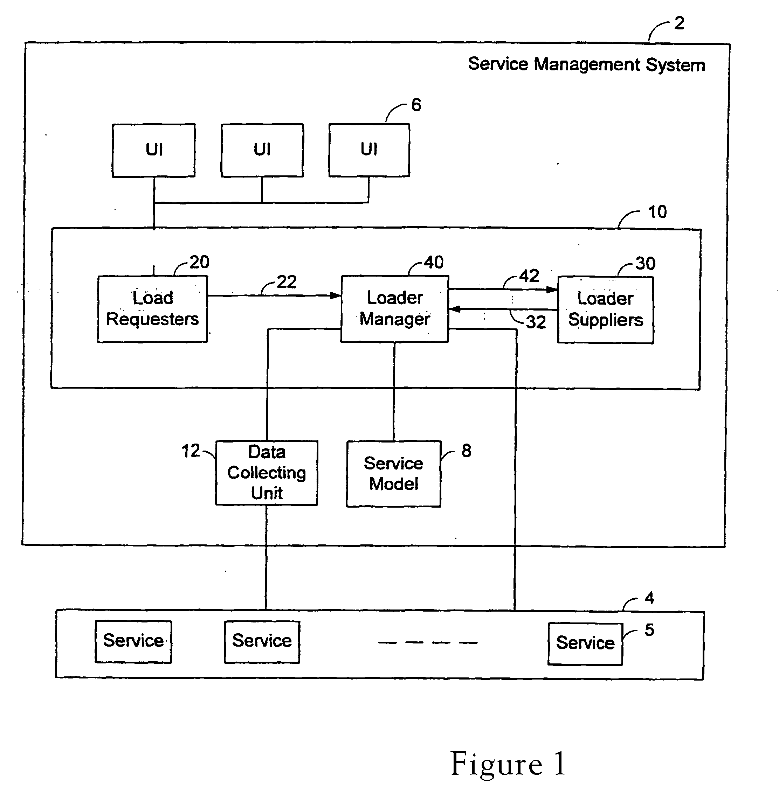

Referring to Figure 1, a loader utility 10 in accordance with an embodiment of the present invention is described.

The loader utility 10 is provided in a service management system 2 that manages a service system 4 comprising a plurality of services 5. The service management system 2 has one or more user interfaces 6 to provide data about the service system 4 to users. The user interfaces are typically GUIs that use MVC or MMVC.

The service management system 2 also has a service model 8 for storing data about the service system 4. The service management system 2 may also have one or more data collecting units 12 for collecting information from the service system 4.

The loader utility 10 is provided to manage the service model 8. It dynamically controls loading of data about the service system 4 into the service model 8.

The loader utility 10 comprises one or more load requesters 20, one or more loader suppliers 30 and a loader manager 40.

The load requesters 20 generate load requests 22 for loading data about the service system 4 into the service model 8. Each load requester 20 is an entity that knows when it wants to load particular data about the service system 4 into the service model 8, but does not know how to load it.

The loader suppliers 30 supply loaders 32. A loader 32 is a software entity that is capable of carrying out the loading of particular data about the service system 4 into the service model 8 when it is called. Loaders 32 are needed when the service management system 2 cannot hold data about the entire service system 4 in the service model 8 at all times.

A loader supplier 30 is an entity that knows how to load required data about the service system 4 into the service model 8, but does not know when to load it into the service model 8.

The loader manager 40 manages the loaders 32, and provides the facilities to dynamically load required data about the service system 4 into the network model 8. The loader manager 40 allows the load requesters 20 and the loader suppliers 30 to interact each other without each having knowledge of the other.

The loader manager 40 receives through its receiving port load requests 22 generated by the load requesters 20. In response to the load requests 22, it issues through its calling port to the loader suppliers 30 calls 42 calling loaders 32 that correspond to the load requests 22. Then, the loader suppliers 30 supply the loaders 32 to the loader manager 40 which performs the loading of the required data about the service system 4 into the service model 8 using the supplied loaders 32.

Each loader 32 is preferably identified by a loader type and a loader context. The loader type may be defined as a string. It identifies what kind of data is to be loaded. It identifies a group of loaders that together load one aspect of the service system 4 into the service model 8. The loader context may be defined as an object. It identifies what data is to be loaded.

For example, in the service system 4, the services 5 may be partitioned in hierarchical groups. Each hierarchical grouping is called "layout". The loaders 32 may be defined for loading of layouts and groups of services in the service system. For layout loaders, the loader type is "layout" and the loader context contains the name of the layout to be loaded. For group loaders, the loader type is "group" and the loader context contains the identification of the group to be loaded or opened.

Each load requester 20 preferably identifies each load request 22 by a loader type and a loader context. In response to the load request 22, the loader manager 40 invokes the required load operation on the particular loader type and context by calling a loader 32 identified by the loader type and context.

Loaders often depend on each other. It is preferable that loaders also include a loader priority. The loader manager 40 invokes loaders in the order depicted by the priority. Loaders with the same priority may run at the same time. Loaders with a lower priority number, e.g. priority 1, are run before loaders with a higher priority number, e.g., priority 5.

Loading usually takes a long time. As a result, the loader manager 40 may give the loaders 32 options of waiting until the loading is finished or returning to the active state immediately. The former option is called "blocking" loading, and the later option is called "un-blocking" loading.

The load requesters 20 may also request unloading of data about the service system 4 from the service model 8. Unloading of data may be requested to provide it to relevant user interfaces 6 for presenting it to the users, or to remove data which is no longer needed in the service model 8.

The loader utility 10 also manages the unloading of data from the service model 8. Unloading of data is similar to loading. The load requesters 20 generate unload requests for unloading particular data about the service system 4. In response to the unload requests, the loader manager 40 calls unloaders from the loader suppliers 30. An unloader is a software entity that is capable of unloading or removing the required data about the service system 4 from the service model 8.

Each unloader is preferably identified by a loader type and a loader context, and indicates its priority, as described above for loaders. Unloaders are run in the reverse order to the loaders. That is, unloaders with a lower priority number, e.g. priority 1, are run after unloaders with a higher priority number, e.g., priority 5.

Unloading usually takes short time. As a result, the unload operation blocks the load requester until the unloading is finished.

Load requesters are preferably aware that load calls on a particular context are reference counted. This means that every load call is matched with an unload call. For example, a load request is made on "Group" 4 ("Group" is the type and 4 is the context). The loader manager 40 performs the load. Another load group 4 request is made. This time the loader manager 40 does nothings since that part of the service model 8 is already loaded by the first load request. On the first unload group 4 request, nothing happens because the loader manager 40 knows that there is a load outstanding due to the second load request. On the second group 4 unload, the unload is actually performed. This is called reference counting.

The loader manager 40 preferably handles the following complexities of loading and unloading.

The loader manager 40 carries out concurrent loading and unloading that will not conflict. It also organizes loading and unloading that will conflict. It handles multiple load requests for the same part of the service model 8.

For example, if there are outstanding multiple load and unload calls on a particular context, i.e., loading and unloading are requested more than once on the particular context, the loader manager 40 preferably performs the actual loading on the first load call and the actual unloading on the last unload call. Subsequent load calls and previous unload calls are not carried out.

The loader manager 40 may also handle caching. That is, once the last unload load requester unloads, the loader manager 40 may wait for some condition before calling the unloaders.

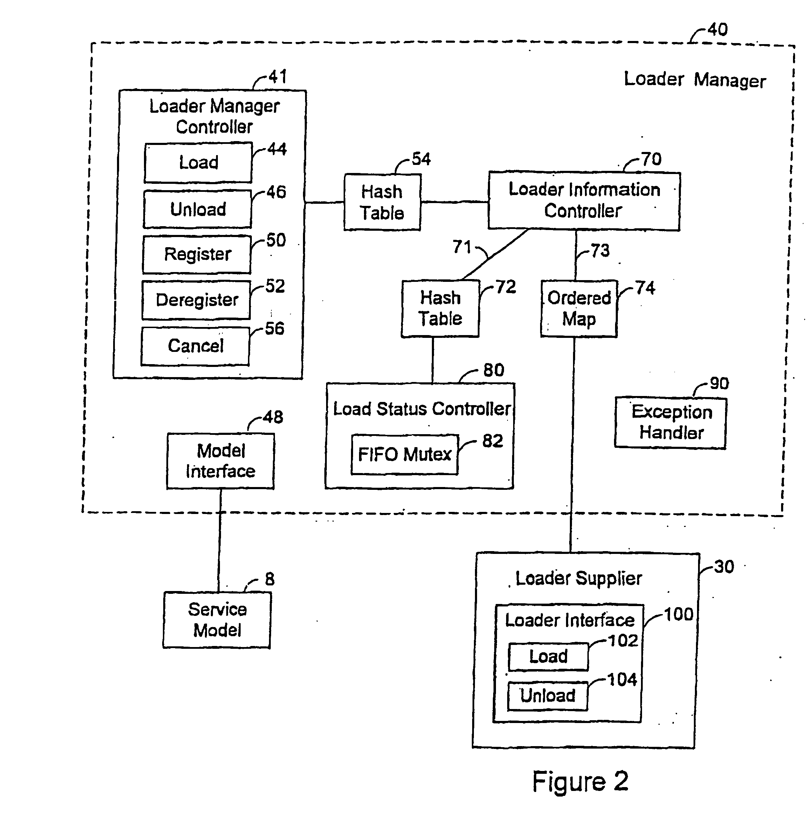

Figure 2 shows an example of the loader manager 40. The loader manager 40 comprises a loader manager controller 41 including a load operator 44 and an unload operator 46. The load operator 44 performs the loading operations, and the unload function 46 performs the unloading operations, as described above.

The loader manager 40 also has a model interface 48 for communication with the service model 2. The loading and unloading of data about the service system 4 are carried out through the model interface 48 using the called loaders and unloaders.

The loader manager controller 41 may also have a register operator 50, deregister operator 52 and loader/unloader register 54.

Through the register operator 50, the loader suppliers 30 may register their available loaders and unloaders in the loader/unloader register 54. Loaders and unloaders are registered to indicate the type of load or unload that they support and the loaders or unloaders themselves. For the purposes of loader ordering and concurrent loading, the loader suppliers 30 may also indicate when their loaders or unloaders should be run.

By using the loader/unloader register 54, when the load operator 44 receives a load request or unload request, the loader manager 40 can obtain a suitable loader or unloader from the register 54.

Loaders and unloaders may be stored in the loader suppliers 30, and the loader manager may find in the register 54 a loader supplier 30 which supplies a suitable loader or unloader for the requested loading or unloading, and call the loader or unloader from the loader supplier 30.

The registration of loaders and unloaders may be based on the loader types and contexts.

The deregister operator 52 allows deregister of an loader or unloader which is no longer supported by any loader supplier 30.

The loader/unloader register 54 may be a hash table 54.

The loader manager controller 41 may also have a cancel operator 56. The cancel operator 56 allows the load requesters 20 to cancel a load operation. When a cancel request is received, the cancel operator 56 issues a cancel call. The cancel call identifies the context of loading to be cancelled. Individual loaders cannot be stopped, but the cancel call prevents any subsequent loaders from starting. The cancel call blocks other operation until the cancellation is completed. If there are outstanding multiple load and cancel requests, a cancel call stops the currently running load on the context or the next load on the context if one is not currently running. If the context is already loaded or there are no load requests in front of the cancel request, then the cancel will have on effect.

The loader manager 40 may also have a loader information controller 70, a load status controller 80 and an exception handler 90.

The loader information controller 70 controls the use of loaders by the loader manager 40. It provides access to loader type specific structures.

The load status controller 80 provides status and loader control on a per active context basis. An active context is one that is loading, loaded, or unloading or an unloaded context that has pending requests. The load status controller 80 handles basic status, thread control, cancellation, and referencing counting, i.e., how many load requests are active on a particular context. It may also operate a thread pool and the implementation of caching, i.e., delayed unloading. The load status controller 80 may have a First-In-First-Out (FIFO) mutex 82. The FIFO mutex 82 prevents collisions among loads and unloads, and keeps load and unload requests in order.

In the loader manager 40, there is one loader manager controller 41. However, there may be several status controller objects in the load status controller 80, one per active context.

The exception handler 90 allows loaders and unloaders to report status and problems to the loader manager 40. The loader manager 40 is then responsible for informing the user via the relevant user interface 6 (Figure 1). The exception handler 90 informs the loader manager 40 whether to continue, what message to display to the user, and what exception caused the loader to fail. The message and the exception are optional but it is preferable to give one so that information can be presented to the user. The exception handler 90 constructs a loader exception using a status code and a user message.

Each loader supplier 30 is provided with a loader interface 100 in order to create a loader and an unloader. The loader interface 100 has a load method 102 and an unload method 104.

The load method 102 of the loader interface 100 is called by the loader manager 40 when it is time for the loader to run. The loader is called in its own thread. A blocking loader does not return until its loading is complete, as described above. Once a loader returns, the next loader may be run.

The unload method 104 of the loader interface 100 is called by the loader manager 40 when it is time for the unloader to run. The unloader is called in its own thread. If an unloader needs to perform time consuming tasks, such unloader may be carried out in another thread. Unloaders may be called with data already removed from the service model 8, i.e., an unloader is prepared for the case where the data that it is to unload is already removed from the service model 8.

In this embodiment, the loader manager 40 organizes data using three main structures, namely, by loader type, by loader context and by priority. For this purpose, the loader manager 40 has a first hash table 54, a second hash table 72 and an ordered map 74.

Organizing data by loader type applies to loaders and unloaders and to active contexts. The loaders and unloaders are registered in the first hash table 54. The hash table 54 maps loader types to the loader information controller 70 using the loader types as keys, and the loader information as values.

Organizing data by loader context applies only to active loader context, The loader information controller 70 registers the active loads 71 in the second hash table 72. The second hash table 72 maps active loader contexts to the load status controller 80 using the loader contexts as keys and load status as values.

Organizing data by priority applies only to loaders and unloaders. The loader information controller 70 registers ordered loaders and unloaders 73 in the ordered map 74. The ordered map 74 keeps instances of the loader interface 100 in order.

It is preferable that the loader manager 40 uses threading of load or unload operation. The threading indicates load or unload operation that is running on a particular context at a time. The threading avoids double loading or unloading on the same context or simultaneous loading and unloading on the same context. Loaders and unloaders can run concurrently on different contexts. It is the loaders responsibility to handle any threading issues in this situation. To control the loading and unloading of a context, the threading uses loader contexts as hash table keys. The threading relies on good hash codes that does not indicate different contexts as equal.

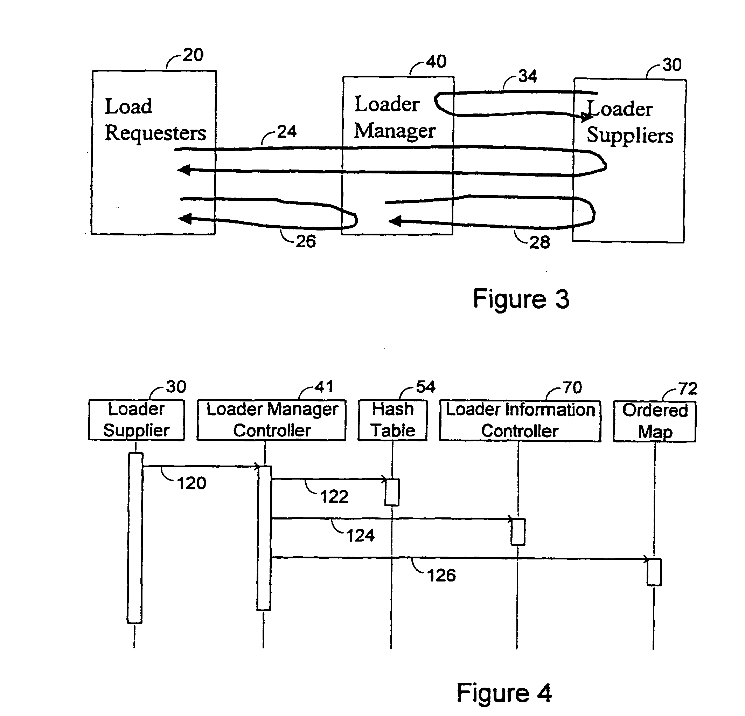

Figure 3 shows examples of load threads. A thread 24 exemplifies blocking loading. Threads 26 and 28 exemplifies non-blocking loading. For non-blocking loading, an extra thread 28 is used. Figure 3 also shows a thread 34 for registration or deregistration.

Controlling the threads in Figure 3 is done at two levels. At the loader manager level, thread control is rendered by synchronizing on the loader manager object. That is, the thread control ensures that only one load, unload, cancel, register or deregister is occurring at one time.

At the second level, whenever control is handed off from the loader manager controller 41 to the load status controller 80 for context specific work, the loader manager controller 41 is released and the thread is controlled by the FIFO mutex 82 contained in the load status controller 80. For example, if two load requests occur at the same time on different contexts, one load request will go ahead of the other while in the load manager controller 41. However, once the two load requests enter separate load status controller objects, they are controlled by different FIFO mutexes 82 and will run concurrently. If the two load requests occur on the same context, they are put in line and run sequentially by the FIFO mutex 82 in the same load status controller object.

Figure 4 shows an example of the register operation. A loader supplier 30 sends a register request to the loader manager controller 41 for registering its loader to the ordered map 72 (120). The register request indicates the loader type, priority and the loader interface. The loader manager controller 41 gets the applicable loader information object from the hash table 54 (122). It also gets the ordered map from the loader information controller 70 (124). Then, the loader manager controller 41 adds the loader interface to the ordered map 72 using the priority (126).

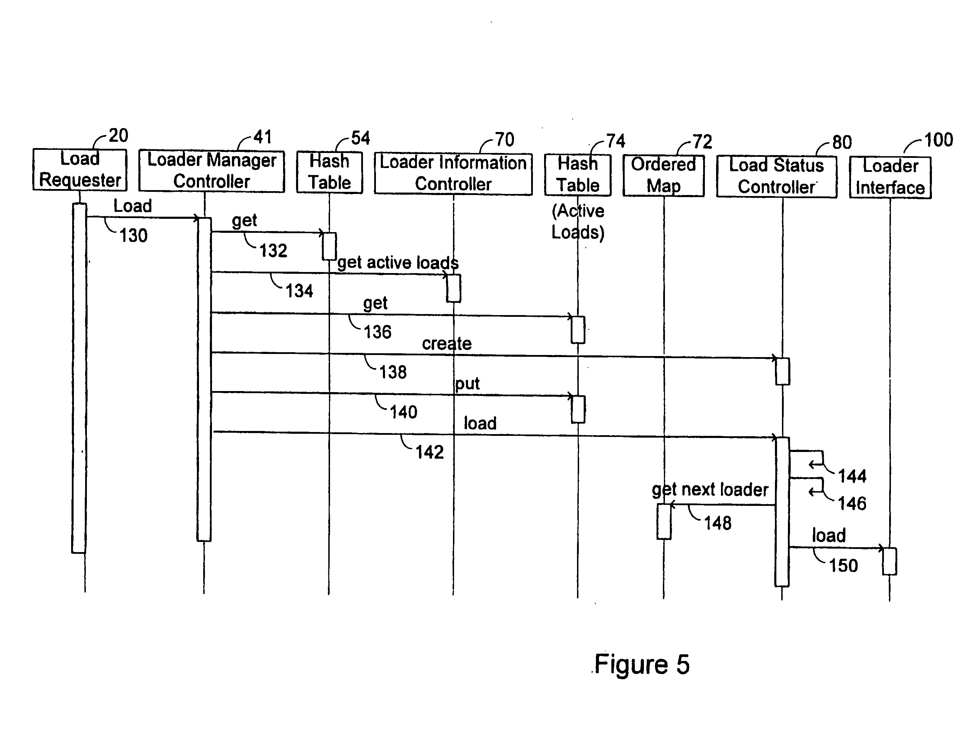

Figure 5 shows an example of loading operation. A loader requester 20 calls for a load by sending a load request to the loader manager controller 41 (130). The load request indicates a string (the loader type), object (the loader context) and boolean (blocking or un-blocking). The loader manager controller 41 gets the loader information from the hash table 54 (132). It also gets the active loads hash table 72 out of the loader information controller 70 (134). It also gets the load status controller object from the hash table 72 using the context (136). In this example, the context is not active, e.g. unloaded with no pending requests. There is no load status controller object. Thus, the loader manager controller 41 creates it in the load status controller 80 (138), and puts it in the hash table 72 so that subsequent requests can get it (140). The loader manager controller 41 calls load on the loader status controller object (142). The loader status controller object 80 locks the context (144). This puts the request "in line" in the FIFO mutex. It is assumed here that there are no requests active so the thread continues immediately. The load status controller object 80 may check for cancel (146). It gets the first/next loader in the ordered map 72 (148), and runs it through the loader interface 100 (150). The steps 146,148 and 150 are repeated until there are no more loaders in the ordered map 72.

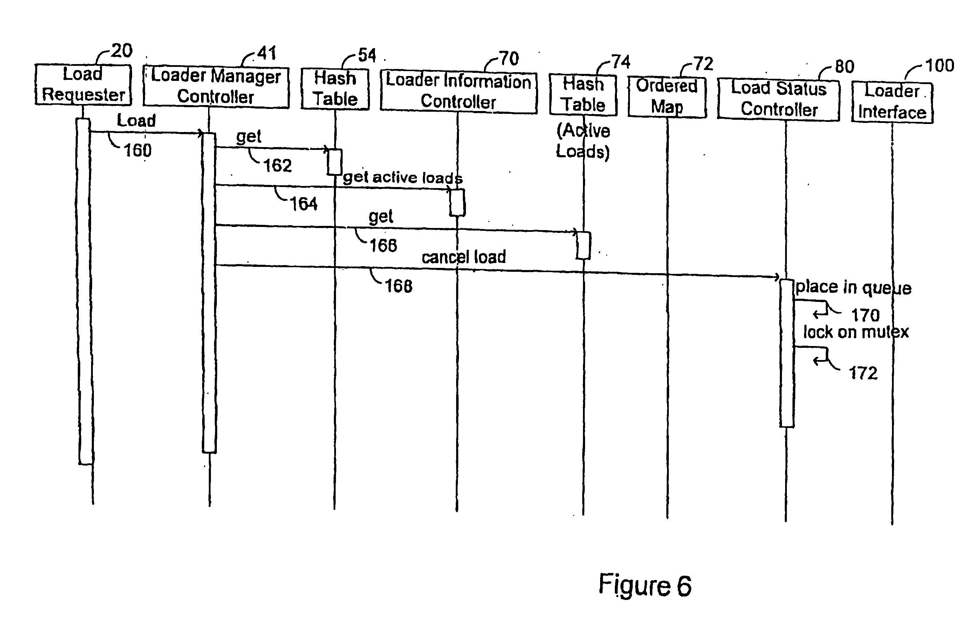

Figure 6 shows an example of the cancel operation. The steps 160, 162, 164, 166 and 168 are equivalent to steps 130, 132, 134, 136 and 142 shown in Figure 5, respectively. At step 170, the cancel leaves an indication that it is pending for the check for cancel at step 172 to detect. Cancel then get in line. If the cancel is detected at step 172, the load stops and interrupts the cancel thread, which is called successful cancel. If not, the cancel thread acquires the FIFO mutex as there is nothing to cancel.

### Example

As example of a service management system, the present invention is suitably applied to a network management system.

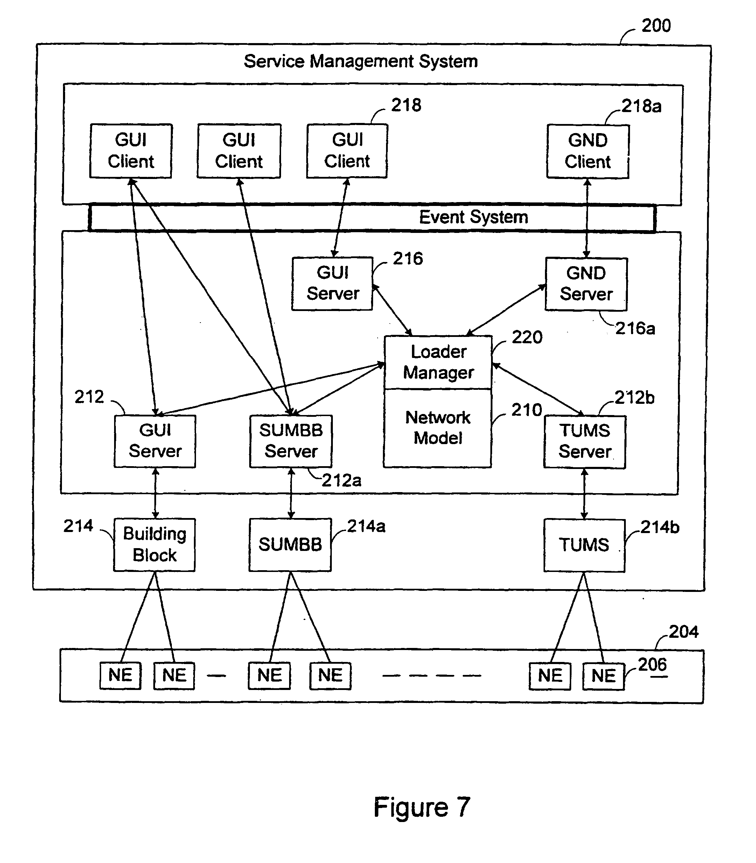

Figure 7 shows an example of a network management system 200 to which the present invention is suitably applied.

The network management system 200 is provided to manage a network 204 comprising a plurality of network elements 206. The network management system 200 has a network model 210 for storing data about the network 204. The network management system 200 uses GUI servers 212 to collect data about the network 204 and load it into the network model 210. Typically, the network management system 200 has a plurality of building blocks 214 (e.g., Summary Building Block (SUMBB) 214a, Topology Universal Modelling Server (TUMS) Block 214b) to collect specific types of data about the network 204 from their assigned set of network elements 206, and provide the collected data to their corresponding GUI servers 212. However, the GUI servers 212 may collect the data directly from the network elements 206.

In order to provide users with data about the network 204, the network management system 200 uses GUI servers 212 and 216 to unload or read required data from the network model 210 and forward it to the relevant GUI clients 218.

Some of GUI servers 212, 216 also provide loaders and unloaders. Those GUI servers 212, 216 act as both load requesters 20 and loader suppliers 30 as shown in Figure 1.

A loader manager 220 is provided to manage the network model 210 in accordance with an embodiment of the invention. It has components similar to those shown in Figure 2.

The GUI servers 212, 216 who act as loader suppliers register their loaders and unloaders in the loader manager 120. GUI servers 212, 216 that wish to load or unload data send a load or unload request to the loader manager 120.

For example, when a user requests to open a group in a GUI client, e.g., Graphical Network Display (GND) client 218a, the GND client 218a sends load requests to its corresponding GUI server, GND server 216a. The GND server 216a in turn asks the loader manager 120 to load the group. The loader manager 120 runs the loaders registered therein in the priority order specified in the loaders. This causes loaders to be run in GUI servers, e.g., Summary Building Block (SUBB) server 212a and a Topology Universal Modelling Server (TUMS) server 212b. The summary Building Block 214a collects data about the group. The TUMS server 212b manages data about the connection relation among the network elements. Thus, the group is loaded into the network model 210. When an unload request is generated from the GND server 216, unloaders are called in a similar way as loaders. The unloaders are not run until the group is closed. The unloaded data is provided to the GND server 216a. The GND server 216a continues with actions to display the group on the GND client 218a.

Some or all of the above described components of the present invention may be implemented by any suitable hardware or software that performs the functions described above.

While particular embodiments of the present invention have been shown and described, changes and modifications may be made to such embodiments without departing from the true scope of the invention. For example, the loader manager may be extended with further operations besides load, unload, and cancel in order to handle more complex loading interactions.

## Claims

1. A loader manager (40) for managing a service model (8) that stores data about a service system (4) having multiple services (5), the load manager (40) comprising:
a receiving port to receive a load request (22) for loading data into the service model (8);
a calling port to call, in response to the load request (22), a loader (32) capable of carrying out the loading of the data, the loader (32) being supplied to the calling port; and
a load operator (44) for invoking the loader (32) by calling it through the calling port in response to the load request received through the receiving port to perform a loading operation associated with the loader (32); and
a model interface (48) for communicating with the service model (8), the loading being carried out through the model interface (48).

2. The loader manager (40) as claimed in claim 1, wherein
the receiving port is adapted to receive an unload request for unloading data from the service model (8);
the calling port is adapted to call an unloader capable of carrying out the unloading of the data;
the loader manager (40) further comprises an unload operator for invoking the unloader by calling it through the calling port in response to the unload request received through the receiving port.

3. The loader manager (40) as claimed in claim 1 further comprising a register (54) for registering the loader (32).

4. The loader manager (40) as claimed in claim 3 further comprising a register operator (50) for controlling registration of the loader in the register (54).

5. The loader manager (40) as claimed in claim 3, wherein the load operator (44) has means to refer the register (54) to call the loader (32).

6. The loader manager (40) as claimed in claim 1, wherein the loader (32) has a priority indicator.

7. The loader manager (40) as claimed in claim 1 further comprising a loader information controller (70) for controlling use of loaders by the loader manager (40).

8. The loader manager (40) as claimed in claim 1 further comprising a status controller (80) to provide status of loading.

9. The loader manager (40) as claimed in claim 1 further comprising an exception handler (90) to report exceptions in the loading.

10. The loader manager (40) as claimed in claim 1, wherein the load request (22) includes a loader type and a loader context, and the load operator (44) calls the loader based on the loader type and the loader context.

11. A service model utility for managing a service model (8) that stores data about a service system (4), the service model utility comprising:
a load requester (20) for generating a load request (22) for loading data into the service model (8);
a loader supplier (30) for supplying a loader (32) capable of carrying out the loading of the data; and
a loader manager (40) including:
a receiving port for receiving the load request (22) from the load requester (20),
a calling port for issuing a call for calling the loader (32) in response to the load request (22), the loader (32) being supplied to the calling port from the loader supplier (30),
a load operator (44) for invoking the loader (32) to perform a loading operation associated with the loader (32), and
a model interface (48) for communicating with the service model (8), the loading being carried out through the model interface (48).

12. The service model utility as claimed in claim 11, wherein
the load requester (20) is adapted for generating an unload request for unloading data from the service model (8);
the loader supplier (30) is adapted for providing an unloader capable of carrying out the unloading of the data; and
the loader manager (40) is adapted for receiving the unload request from the load requester (20), and issuing a call for calling the unloader from the loader supplier (30) in response to the unload request.

13. The service model utility as claimed in claim 11, wherein the loader manager (40) has a register (54) for registering the loader (32).

14. The service model utility as claimed in claim 13, wherein the load manager (40) has a register operator (50) for controlling registration of the loader in the register (54).

15. The service model utility as claimed in claim 11, wherein the loader (32) has a priority indicator.

16. The service model utility as claimed in claim 11 further comprising a loader information controller (70) for controlling use of loaders by the loader manager (40).

17. The service model utility as claimed in claim 11 further comprising a status controller (80) to provide status of loading.

18. The service model utility as claimed in claim 11 further comprising an exception handler (90) to report exceptions in the loading.

19. The service model utility as claimed in claim 11, wherein the load request (22) includes a loader type and a loader context, and the load operator (44) calls the loader based on the loader type and the loader contexts.

20. A method for managing a service model (8) that stores data about a service system (4), the method comprising:
at a loader manager (40), receiving a load request (22) for loading data into the service model (8);
at the loader manager (40), calling a loader (32) in response to the load request (22), the loader (32) being capable of carrying out the loading of the data into the service model (8);
at a load supplier (30), in response to the call, supplying the loader (32) to the loader manager (40); and
at the loader manager (40), allowing the loader (32) to carry out the loading of the data into the service model (8) through a model interface (48) for communicating with the service model (8).

21. The method as claimed in claim 20 further comprising:
at the loader manager (40), receiving a register request for registering the loader (32); and
at the loader manager (40), registering the loader (32) in response to the register request.

22. The method as claimed in claim 21 further comprising:
at the loader manager (40), finding registration of the loader (32) in response to the load request (22); and
at the loader manager (40), calling the loader (32) from the loader supplier (30) in view of the registration.

23. The method as claimed in claim 20 further comprising:
at the loader manager (40), receiving an unload request for unloading data from the service model (8); and
at the loader manager (40), calling an unloader in response to the unload request, the unloader being capable of carrying out the unloading of the data from the service model (8); and
at the loader manager (40), allowing the unloader to carry out the unloading of the data from the service model (8).

## Patentansprüche

1. Lader-Verwaltung (40) zum Verwalten eines Dienstemodells (8), das Daten über ein Dienstesystem (4) speichert, das mehrfache Dienste (5) aufweist, wobei die Lade-Verwaltung Folgendes umfasst:
einen Empfangs-Port zum Empfang einer Lade-Anforderung (22) zum Laden von Daten in das Dienstemodell (8);
einen Aufruf-Port zum Aufrufen, als Antwort auf die Lade-Anforderung (22), eines Laders (32), der zum Laden der Daten fähig ist, wobei der Lader (32) an den Aufruf-Port geliefert wird; und
einen Lade-Operator (54) zum Aufruf des Laders (32) durch Aufruf des Laders über den Aufruf-Port als Antwort auf die Lade-Anforderung, die über den Empfangs-Port empfangen wird, um eine den Lader (32) zugeordnete Lade-Operation auszuführen; und
eine Modell-Schnittstelle (48) zur Kommunikation mit dem Dienstemodell (8), wobei das Laden über die Modell-Schnittstelle (48) ausgeführt wird.

2. Lader-Verwaltung (40) nach Anspruch 1, bei der:
der Empfangs-Port zum Empfang einer Entlade-Anforderung zum Entladen von Daten aus dem Dienstemodell (8) ausgebildet ist;
der Aufruf-Port zum Aufrufen eines Entladers ausgebildet ist, der zur Durchführung des Entladens der Daten fähig ist;
die Lader-Verwaltung (40) weiterhin einen Entlade-Operator zum Aufrufen des Entladers durch Aufrufen des Entladers über den Aufruf-Port als Antwort auf die Entlade-Anforderung umfasst, die durch den Empfangs-Port empfangen wird.

3. Lader-Verwaltung (40) nach Anspruch 1, die weiterhin ein Register (54) zum Registrieren des Laders (32) umfasst.

4. Lader-Verwaltung (40) nach Anspruch 3, die weiterhin einen Register-Operator (50) zur Steuerung des Registrierens des Laders in dem Register (54) umfasst.

5. Lader-Verwaltung (40) nach Anspruch 3, bei der der Lade-Operator (44) Einrichtungen zur Bezugnahme auf das Register (54) zum Aufruf des Laders (32) umfasst.

6. Lader-Verwaltung (40) nach Anspruch 1, bei der der Lader (32) eine Prioritätsanzeige aufweist.

7. Lader-Verwaltung (40) nach Anspruch 1, die weiterhin eine Lader-Informationssteuerung (70) zur Steuerung der Verwendung der Lader durch die Lader-Verwaltung (40) umfasst.

8. Lader-Verwaltung (40) nach Anspruch 1, die weiterhin eine Status-Steuerung (80) zur Lieferung eines Status des Ladens umfasst.

9. Lader-Verwaltung (40) nach Anspruch 1, die weiterhin eine Ausnahme-Abwicklung (90) zum Bericht von Ausnahmen bei dem Laden umfasst.

10. Lader-Verwaltung (40) nach Anspruch 1, bei der die Lade-Anforderung (22) einen Lader-Typ und einen Lade-Kontext einschließt, und bei der der Lade-Operator (44) den Lader auf der Grundlage des Lader-Typs und des Lader-Kontextes aufruft.

11. Dienstemodell-Einrichtung zum Verwalten eines Dienstemodells (8), das Daten über ein Dienstesystem (4) speichert, wobei die Dienstemodell-Einrichtung Folgendes umfasst:
ein Lade-Anforderungselement (20) zur Erzeugung einer Ladeanforderung (22) zum Laden von Daten in das Dienstemodell (8);
ein Lader-Zuführungselement (30) zur Zuführung eines Laders (32), der zum Durchführen des Ladens der Daten geeignet ist; und
eine Lader-Verwaltung (40), die Folgendes einschließt:
einen Empfangs-Port zum Empfangen der Lade-Anforderung von dem Lade-Anforderungselement (20),
einem Aufruf-Port zur Abgabe eines Aufrufs zum Aufrufen des Laders (32) als Antwort auf die Lade-Anforderung (22), wobei der Lader (32) von dem Lader-Zuführungselement (30) an den Aufruf-Port geliefert wird,
einen Lade-Operator (44) zum Aufrufen des Laders (32) zur Durchführung einer Lade-Operation, die dem Lader (32) zugeordnet ist, und
eine Modell-Schnittstelle (48) zur Kommunikation mit dem Dienstemodell (8), wobei das Laden über die Modell-Schnittstelle (48) ausgeführt wird.

12. Dienstemodell-Einrichtung nach Anspruch 11, bei der:
das Lade-Anforderungselement (20) zur Erzeugung einer Entlade-Anforderung zum Entladen von Daten aus dem Dienstemodell (8) ausgebildet ist;
das Lade-Zuführungselement (30) zur Lieferung eines Entladers ausgebildet ist, der zum Durchführen des Entladens der Daten geeignet ist; und
die Lader-Verwaltung (40) zum Empfang der Entlade-Anforderung von dem Lade-Anforderungselement (20) und zur Abgabe eines Aufrufs zum Aufrufen des Entladers von dem Lader-Zuführungselement (30) als Antwort auf die Entlade-Anforderung ausgebildet ist.

13. Dienstemodell-Einrichtung nach Anspruch 11, bei der die Lader-Verwaltung (40) ein Register (54) zum Registrieren des Laders (32) aufweist.

14. Dienstemodell-Einrichtung nach Anspruch 13, bei der die Lader-Verwaltung (40) einen Register-Operator (50) zum Steuern der Registrierung des Laders in dem Register (54) aufweist.

15. Dienstemodell-Einrichtung nach Anspruch 11, bei der der Lader (32) eine Prioritätsanzeige aufweist.

16. Dienstemodell-Einrichtung nach Anspruch 11, die weiterhin eine Lader-Informations-Steuerung (70) zum Steuern der Verwendung der Lader durch die Lader-Verwaltung (40) umfasst.

17. Dienstemodell-Einrichtung nach Anspruch 11, die weiterhin eine Status-Steuerung (80) zur Lieferung eines Status des Ladens umfasst.

18. Dienstemodell-Einrichtung nach Anspruch 11, die weiterhin eine Ausnahme-Abwicklung (90) zum Bericht von Ausnahmen bei dem Laden umfasst.

19. Dienstemodell-Einrichtung nach Anspruch 11, bei der die Lade-Anforderung (22) einen Lader-Typ und einen Lader-Kontext einschließt, und bei der der Lade-Operator (44) den Lader auf der Grundlage des Lader-Typs und der Lader-Kontexte aufruft.

20. Verfahren zum Verwalten eines Dienstemodells (8), das Daten über ein Dienstesystem (4) speichert, wobei das Verfahren Folgendes umfasst:
an einer Lader-Verwaltung (40), Empfang einer Lade-Anforderung (22) zum Laden von Daten in das Dienstemodell (8);
an der Lader-Verwaltung (40), Aufrufen eines Laders (32) als Antwort auf die Lade-Anforderung (22); wobei der Lader (22) zum Durchführen des Ladens der Daten in das Dienstemodell (8) geeignet ist;
an einem Lade-Zuführungselement (30), Liefern des Laders (32) an die Lader-Verwaltung (40) als Antwort auf den Aufruf; und
an der Lader-Verwaltung (40), Ermöglichen, dass der Lader (32) das Laden der Daten in das Dienstemodell (8) über eine Modell-Schnittstelle (48) zur Kommunikation mit dem Dienstemodell (8) ausführt.

21. Verfahren nach Anspruch 20, das weiterhin Folgendes umfasst:
an der Lader-Verwaltung (40), Empfangen einer Registrierungs-Anforderung zum Registrieren des Laders (32); und
an der Lader-Verwaltung (40), Registrieren des Laders (32) als Antwort auf die Registrierungs-Anforderung.

22. Verfahren nach Anspruch 21, das weiterhin Folgendes umfasst:
an der Lader-Verwaltung (40), Finden der Registrierung des Laders (32) als Antwort auf die Lade-Anforderung (22); und
an der Lader-Verwaltung (40), Aufrufen des Laders (32) von dem Lader-Zuführungselement (30) im Hinblick auf die Registrierung.

23. Verfahren nach Anspruch 20, das weiterhin Folgendes umfasst:
an der Lader-Verwaltung (40), Empfangen einer Entlade-Anforderung zum Entladen von Daten aus dem Dienstemodell (8); und
an der Lader-Verwaltung (40), Aufrufen eines Entladers als Antwort auf die Entlade-Anforderung, wobei der Entlader in der Lage ist, das Entladen der Daten aus dem Dienstemodell (8) durchzuführen; und
an der Lader-Verwaltung (40), Ermöglichen, dass der Entlader das Entladen der Daten aus dem Dienstemodell (8) ausführt.

## Revendications

1. Un gestionnaire de chargeur (40) pour gérer un modèle de services (8) qui stocke des données concernant un système de services (4) ayant de multiples services (5), le gestionnaire de chargeur (40) comprenant :
un port de réception pour recevoir une demande de chargement (22) pour charger des données dans le modèle de services (8);
un port d'appel pour appeler, en réponse à la demande de chargement (22), un chargeur (32) capable d'accomplir le chargement des données, le chargeur (32) étant fourni au port d'appel; et
un opérateur de chargement (44) pour invoquer le chargeur (32) en l'appelant par l'intermédiaire du port d'appel, en réponse à la demande de chargement reçue par l'intermédiaire du port de réception, pour effectuer une opération de chargement associée au chargeur (32); et
une interface de modèle (48) pour communiquer avec le modèle de services (8), le chargement étant accompli à travers l'interface de modèle (48).

2. Le gestionnaire de chargeur (40) selon la revendication 1,
dans lequel
le port de réception est adapté pour recevoir une demande de déchargement pour décharger des données à partir du modèle de services (8);
le port d'appel est adapté pour appeler un déchargeur capable d'accomplir le déchargement des données;
le gestionnaire de chargeur (40) comprend en outre un opérateur de déchargement pour invoquer le déchargeur en l'appelant par l'intermédiaire du port d'appel, en réponse à la demande de déchargement reçue par l'intermédiaire du port de réception.

3. Le gestionnaire de chargeur (40) selon la revendication 1, comprenant en outre un registre (54) pour enregistrer le chargeur (32).

4. Le gestionnaire de chargeur (40) selon la revendication 3, comprenant en outre un opérateur de registre (50) pour commander l'enregistrement du chargeur dans le registre (54).

5. Le gestionnaire de chargeur (40) selon la revendication 3, dans lequel l'opérateur de chargement (44) comporte un moyen pour faire référence au registre (54) pour appeler le chargeur (32).

6. Le gestionnaire de chargeur (40) selon la revendication 1, dans lequel le chargeur (32) a un indicateur de priorité.

7. Le gestionnaire de chargeur (40) selon la revendication 1, comprenant en outre une unité de commande d'information de chargeur (70) pour commander l'utilisation de chargeurs par le gestionnaire de chargeur (40).

8. Le gestionnaire de chargeur (40) selon la revendication 1, comprenant en outre une unité de commande d'état (80) pour fournir un état de chargement.

9. Le gestionnaire de chargeur (40) selon la revendication 1, comprenant en outre un gestionnaire d'exceptions (90) pour signaler des exceptions dans le chargement.

10. Le gestionnaire de chargeur (40) selon la revendication 1, dans lequel la demande de chargement (22) comprend un type de chargeur et un contexte de chargeur, et l'opérateur de chargement (44) appelle le chargeur sur la base du type de chargeur et du contexte de chargeur.

11. Un utilitaire de modèle de services pour gérer un modèle de services (8) qui stocke des données concernant un système de services (4), l'utilitaire de modèle de services comprenant :
un demandeur de chargement (20) pour générer une demande de chargement (22) pour charger des données dans le modèle de services (8);
un fournisseur de chargeur (30) pour fournir un chargeur (32) capable d'accomplir le chargement des données; et
un gestionnaire de chargeur (40) incluant :
un port de réception pour recevoir la demande de chargement (22) provenant du demandeur de chargement (20),
un port d'appel pour émettre un appel pour appeler le chargeur (32) en réponse à la demande de chargement (22), le chargeur (32) étant fourni au port d'appel à partir du fournisseur de chargeur (30).
un opérateur de chargement (44) pour invoquer le chargeur (32) pour effectuer une opération de chargement associée au chargeur (32), et
une interface de modèle (48) pour communiquer avec le modèle de services (8), le chargement étant accompli à travers l'interface de modèle (48).

12. L'utilitaire de modèle de services selon la revendication 11, dans lequel
le demandeur de chargement (20) est adapté pour générer une demande de déchargement pour décharger des données à partir du modèle de services (8);
le fournisseur de chargeur (30) est adapté pour fournir un déchargeur capable d'accomplir le déchargement des données; et
le gestionnaire de chargeur (40) est adapté pour recevoir la demande de déchargement provenant du demandeur de chargement (20), et émettre un appel pour appeler le déchargeur à partir du fournisseur de chargeur (30) en réponse à la demande de déchargement.

13. L'utilitaire de modèle de services selon la revendication 11, dans lequel le gestionnaire de chargeur (40) comporte un registre (54) pour enregistrer le chargeur (32).

14. L'utilitaire de modèle de services selon la revendication 13, dans lequel le gestionnaire de chargeur (40) comporte un opérateur de registre (50) pour commander l'enregistrement du chargeur dans le registre (54).

15. L'utilitaire de modèle de services selon la revendication 11, dans lequel le chargeur (32) a un indicateur de priorité.

16. L'utilitaire de modèle de services selon la revendication 11, comprenant en outre une unité de commande d'information de chargeur (70) pour commander l'utilisation de chargeurs par le gestionnaire de chargeur (40).

17. L'utilitaire de modèle de services selon la revendication 11, comprenant en outre une unité de commande d'état (80) pour fournir un état de chargement.

18. L'utilitaire de modèle de services selon la revendication 11, comprenant en outre un gestionnaire d'exceptions (90) pour signaler des exceptions dans le chargement.

19. L'utilitaire de modèle de services selon la revendication 11, dans lequel la demande de chargement (22) comprend un type de chargeur et un contexte de chargeur, et l'opérateur de chargement (44) appelle le chargeur sur la base du type de chargeur et des contextes de chargeur.

20. Un procédé pour gérer un modèle de services (8) qui stocke des données concernant un système de services (4), le procédé comprenant :
à un gestionnaire de chargeur (40), la réception d'une demande de chargement (22) pour charger des données dans le modèle de services (8);
au gestionnaire de chargeur (40), l'appel d'un chargeur (32) en réponse à fa demande de chargement (22), le chargeur (32) étant capable d'accomplir le chargement des données dans le modèle de services (8);
à un fournisseur de chargeur (30), en réponse à l'appel, la fourniture du chargeur (32) au gestionnaire de chargeur (40); et
au gestionnaire de chargeur (40), l'opération consistant à autoriser le chargeur (32) à accomplir le chargement des données dans le modèle de services (8) à travers une interface de modèle (48) pour communiquer avec le modèle de services (8).

21. Le procédé selon la revendication 20, comprenant en outre :
au gestionnaire de chargeur (40), la réception d'une demande d'enregistrement pour enregistrer le chargeur (32); et
au gestionnaire de chargeur (40), l'enregistrement du chargeur (32) en réponse à la demande d'enregistrement.

22. Le procédé selon la revendication 21, comprenant en outre :
au gestionnaire de chargeur (40), l'obtention de l'enregistrement du chargeur (32) en réponse à la demande de chargement (22); et
au gestionnaire de chargeur (40), l'appel du chargeur (32) à partir du fournisseur de chargeur (30) en vue de l'enregistrement.

23. Le procédé selon la revendication 20, comprenant en outre :
au gestionnaire de chargeur (40), la réception d'une demande de déchargement pour décharger des données à partir du modèle de services (8); et
au gestionnaire de chargeur (40), l'appel d'un déchargeur en réponse à la demande de déchargement, le déchargeur étant capable d'accomplir le déchargement des données à partir du modèle de services (8); et
au gestionnaire de chargeur (40), l'opération consistant à autoriser le déchargeur à accomplir le déchargement des données à partir du modèle de services (8).
